## Europäisches Patentamt

## European Patent Office

## Office européen des brevets

(19)

(11) Veröffentlichungsnummer: **0 037 356**
**B1**

(12) **EUROPÄISCHE PATENTSCHRIFT**

(45) Veröffentlichungstag der Patentschrift:
28.09.83

(51) Int. Cl.³: **A 01 D 53/08**

(21) Anmeldenummer: **81440011.5**

(22) Anmeldetag: **10.03.81**

(54) **Abstreifeinrichtung für den Auswurfkanal eines Sichelrasenmähers.**

(30) Priorität: **13.03.80  FR 8005958**

(43) Veröffentlichungstag der Anmeldung:
**07.10.81 Patentblatt 81/40**

(45) Bekanntmachung des Hinweises auf die Patenterteilung:
**28.09.83 Patentblatt 83/39**

(84) Benannte Vertragsstaaten:
**AT BE CH DE LI NL**

(56) Entgegenhaltungen:
**DE-A-2 340 133**
**US-A-2 823 508**
**US-A-3 524 307**
**US-A-4 114 353**

(73) Patentinhaber: **Outils Wolf, Société à responsabilité limitée, Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé, F-67000 Strasbourg (FR)**

BUNDESDRUCKEREI BERLIN

## Abstreifeinrichtung für den Auswurfkanal eines Sichelrasenmähers

Die vorliegende Erfindung bezieht sich auf eine Abstreifeinrichtung für den Auswurfkanal eines Sichelrasenmähers in Form eines Elements, das verbunden mit einer sich drehenden Welle in dem Auswurfkanal für das Mähgut angeordnet ist.

Bei bekannten Rasenmähern dieses Typs kann es dann, wenn der Benutzer die Entleerung des Graskorbs vergißt, oder bei hohem Graswuchs zu einer Verstopfung des Auswurfkanals kommen, die Anlaß zu einer gleichzeitig erfolgenden Verstopfung des Schraubenliniengehäuses und zum Sperren des Messers sowie zu einem Abstellen des Motors sein kann. Ein solches Verstopfen macht meist eine vollständige und lästige Reinigung des Schraubenliniengehäuses und danach die Wiederinbetriebnahme des Motors nötig.

Um diesen Nachteil zu beseitigen, weisen viele bekannte Sichelrasenmäher einen nach unten offenen Auswurfkanal auf, der gemäß der Laufbahn des Messers das Schraubenliniengehäuse tangential verlängert, so daß die Gefahr der Verstopfung zwar praktisch aufgehoben, die Sicherheit des Benutzers indem Steine von der Maschine hinausgeschleudert werden können keinesfalls aber gewährleistet wird. Andere bekannte Mäher besitzen ein kreisförmiges, geschlossenes Gehäuse mit obenliegendem Auswurfkanal. Bei solchen Mähern kommt es zwar zu keiner Herausschleuderung von Steinen, die Verstopfungen sind aber häufig und praktisch nicht zu verhindern. Letztlich, bei nach hinten gerichtetem Auswurf des Schnittgrases und insbesondere dann, wenn im Auswurfkanal eine quergerichtete Antriebswelle angeordnet ist, und insbesondere bei Hinterradantrieb eines Rasenmähers, sind die Verstopfungsprobleme noch akuter. Bei einem weiteren bekannten Sichelrasenmäher nach der US-A-2 823 508 ist eine Abstreifeinrichtung vorgesehen, die aus einer Scheibe besteht, die durch eine senkrechte Achse angetrieben wird und an welcher schräg sich nach unten erstreckende Finger angebracht sind.

Die Herstellung dieser Abstreifeinrichtung ist aufwendig und die Funktionsweise ist nicht optimal.

Der vorliegenden Erfindung liegt die Aufgabe zugrunde, diese Nachteile zu beseitigen. Diese Aufgabe wird bei der eingangs angegebenen Abstreifeinrichtung erfindungsgemäß dadurch gelöst, daß das Element aus einem oder mehreren, direkt auf der Hinterräderwelle befestigten Bügeln besteht.

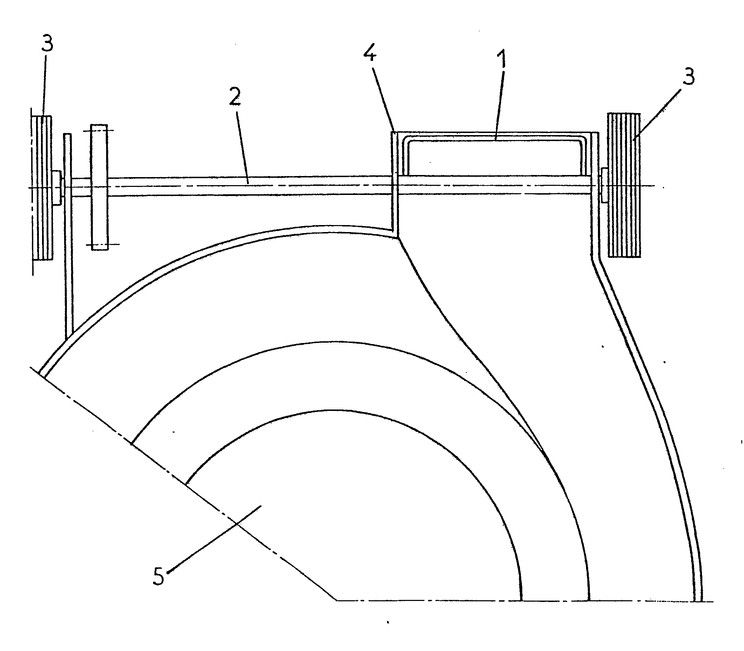

Die einzige Figur zeigt eine teilweise Ansicht des unteren Teils des Gehäuses eines Sichelrasenmähers, der mit der erfindungsgemäßen Abstreifeinrichtung versehen ist.

Die in der Zeichnung dargestellte Einrichtung besteht aus einem Abstreifelement für das gemähte Gras, das als Bügel 1 ausgebildet ist. Dieser ist an der Hinterräderwelle 2 zum Antrieb der hinteren Antriebsräder 3 befestigt, z. B. verschweißt und er erstreckt sich innerhalb des Grasauswurfkanals, der das Gehäuse 5 des Rasenmähers verlängert. Das Element 1 kann ebenfalls aus mehreren, auf einer Antriebswelle befestigten Bügeln bestehen.

Der Bügel 1 erstreckt sich vorzugsweise über die ganze Breite des Auswurfkanals 4 mit einem Abstand zur Hinterräderwelle 2 hinweg, so daß es zu einem wirksamen Kehreffekt kommt, der ausreicht, um das gesamte Schnittgras aus dem Auswurfkanal 4 zu entfernen, ehe es zu einer Verstopfung oder Blockierung kommt. Bei normaler Entfernung des Schnittgrases, wobei der Kanal völlig frei ist, übt der Bügel 1 keinen Einfluß auf das sich bewegende Gras aus, weil das Element während des Schneidens des Grases stets in Bewegung ist und weil es ein relativ kleines Hindernis darstellt, das nicht effektiv zu einem Grasstau führen könnte.

## Patentanspruch

Abstreifeinrichtung für den Auswurfkanal eines Sichelrasenmähers in Form eines Elements, das verbunden mit einer sich drehenden Welle in dem Auswurfkanal (4) für das Mähgut angeordnet ist, dadurch gekennzeichnet, daß das Element aus einem oder mehreren, direkt auf der Hinterräderwelle (2) befestigten Bügeln (1) besteht.

## Claim

Scraping or stripping device for the ejection duct of a sickle lawn mower in the form of an element connected to a rotary shaft in the mown material ejection duct (4), characterised in that the element comprises one or more U-shaped members (1) directly fixed to the rear wheel shaft (2).

## Revendication

Dispositif anti-bourrage pour le canal d'éjection d'une tondeuse à gazon, sous forme d'un élément solidaire d'un axe entraîné en rotation et qui est disposé dans le canal d'éjection (4) de l'herbe coupé, caractérisé en ce que l'élément est constitué par un ou plusieurs étriers (1) fixés directement sur l'axe (2) des roues arrière.